# EUROPEAN PATENT SPECIFICATION

(11) **EP 2 950 506 B1**
(45) Date of publication and mention of the grant of the patent: **04.01.2017**
(21) Application number: 15169780.2
(22) Date of filing: 29.05.2015
(51) Int. Cl.: H04L 29/06, G06Q 20/38, H04L 9/08, H04L 9/14, H04L 9/16, H04W 12/04

(54) **METHOD AND SYSTEM FOR ESTABLISHING A SECURE COMMUNICATION CHANNEL**
VERFAHREN UND SYSTEM ZUR EINRICHTUNG EINES SICHEREN KOMMUNIKATIONSKANALS
PROCEDE PERMETTANT D'ETABLIR UN CANAL DE COMMUNICATION SECURISE

(30) Priority: 29.05.2014 US 201414289692
(43) Date of publication of application: 02.12.2015
(73) Proprietor: Entersekt International Limited, Ebene (MU)
(72) Inventor: BRAND, Christiaan Johannes Petrus, Stellenbosch (ZA)
(74) Representative: Gill Jennings & Every LLP

(56) References cited:
- WO-A1-2005/015819
- WO-A1-2005/107140
- DIERKS T ET AL: "RFC 5246 - The Transport Layer Security (TLS) Protocol", INTERNET CITATION, 31 August 2008 (2008-08-31), pages 1-104, XP002721348, Retrieved from the Internet: URL:http://tools.ietf.org/html/rfc5246 [retrieved on 2014-03-06]

## Description

### FIELD OF THE INVENTION

This invention relates to methods and systems for secure communications, and, more particularly, to a method and system for establishing a secure communication channel between a mobile handset and a remotely accessible server.

### BACKGROUND TO THE INVENTION

It is often desirable to establish a secure communication channel between two communicating parties, particularly in cases where sensitive data is to be transmitted between the parties. Many systems exist wherein a secure communication channel is required between a mobile handset and a remotely accessible server, such as an application server, so as to ensure that data communicated between the parties are transmitted in a manner that is end-to-end secure.

In the remainder of this specification the term "mobile handset" should be interpreted to include any mobile communications device capable of communicating over a communications network, such as a cellular network, and having at least a limited amount of processing power. The term should be interpreted to specifically include all mobile or cellular phones but may also include portable computers such as laptops, handheld personal computers and the like.

An increasing number of financial transactions are initiated, conducted and/or authorized using mobile handsets. Accordingly, secure communication channels are often required when sensitive data relating to such financial transactions are to be transmitted to and from the mobile handset.

Miscreants are constantly developing new techniques to intercept user and transactional data and to use these for defrauding one or more parties involved. Examples of security threats include Man-In-The-Middle (MITM) attacks, Pharming, Phishing, Over-The-Air SMS/data sniffing, third party infrastructure hijacking, Trojans, key loggers as well as various combinations of these and other threats. Using these and other methods, sensitive data such as financial information or encryption keys associated with a user or the mobile handset of the user may be obtained and used for fraudulent purposes.

A known method used in an attempt to alleviate the problems described above, is the generation of credentials having a limited validity, typically for a single use. For example, a single-use encryption key or password may be generated for securing a communication channel between a mobile handset and a remotely accessible server.

The mobile handset may be required to produce the appropriate key or password using information contained in a challenge from the remotely accessible server. For example, the remotely accessible server may transmit a challenge that includes a seed value to the mobile handset. The mobile handset uses the seed value and an incremental counter value to generate a single-use key or password for a particular communication, which can be verified by the remotely accessible server.

A problem associated with this method of securing a communication channel is that it may involve both the mobile handset and the remotely accessible server being required to possess the seed value and/or the counter value at some stage. If the mobile handset is compromised, these values may be obtained and fraudulently used, as described above.

Methods exist whereby keys or other sensitive data such as a seed and/or counter value are encrypted with a passcode and stored on the mobile handset in an encrypted format. However, the encrypted data may not be securely stored, and it may be possible that the passcode is obtained, for example by way of an exhaustive search, in order to decrypt and obtain the keys or other sensitive data.

Embodiments of the present invention aim to address these and other problems, at least to some extent.

Patent Cooperation Treaty patent application publication number WO 2005/107140 describes a system and method for generating reproducible session keys that are generated on a server, derived from an incremental counter. The session keys are updated for each session. The session key is received by a client computer, encrypted with a public key of the client computer. The client computer exchanges confidential messages with the server based on the session key.

Dierks T et. al: 'RFC 5246 - The Transport Layer Security (TLS) Protocol, 31 August 2008 describes a session management protocol.

Aspects of the invention are set out in the appended claims.

In order for the invention to be more fully understood, implementations thereof will now be described with reference to the accompanying drawings.

### BRIEF DESCRIPTION OF THE DRAWINGS

In the drawings:-
Figure 1A is a schematic illustration of an embodiment of a system for establishing a secure communication channel between a mobile handset and a remotely accessible server according to the invention;
Figure 1B is a block diagram illustrating components of a remotely accessible server according to embodiments of the invention;
Figure 1C is a block diagram illustrating components of a handset software application according to embodiments of the invention;
Figure 1D illustrates an exemplary digital certificate that may be used in embodiments of the invention;
Figure 2 is a flow diagram illustrating a method of establishing a secure communication channel according to embodiments of the invention; and
Figure 3 is a swim-lane flow diagram illustrating a method of establishing a secure communication channel according to embodiments of the invention.

### DETAILED DESCRIPTION WITH REFERENCE TO THE DRAWINGS

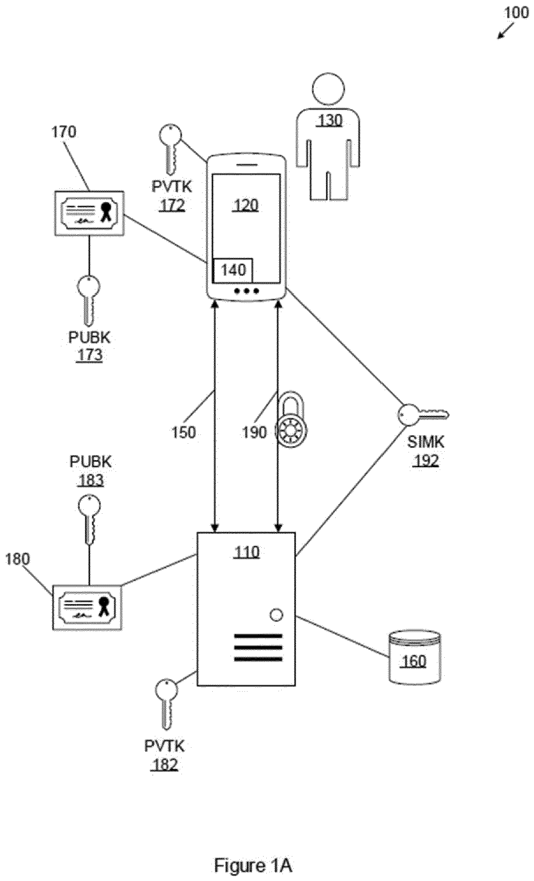

An embodiment of a system (100) for establishing a secure communication channel is illustrated in Figure 1A. The system (100) comprises a remotely accessible server (110) and a mobile handset (120) of a user (130). The mobile handset (120) has a handset software application (140) installed thereon. In this embodiment, the remotely accessible server (110) is an application server and the mobile handset (120) is a mobile phone.

The remotely accessible server (110) and mobile handset (120) are able to communicate over a communication channel (150). The remotely accessible server (110) has or is linked to a database (160) on which details relating to the mobile handset (120) and/or the user (130) may be stored.

An encryption module may be provided by a certificate authority (not shown) which provides encryption functionality to the remotely accessible server (110) and/or the mobile handset (120). It should be apparent that the encryption modules may be compiled as part of the handset software application (140) and a server software application resident on the remotely accessible server (110), respectively. Where in the remainder of this description reference is made to functionality of either the server software application or the handset software application (140) it will be appreciated that such functionality may in effect be provided by the encryption module at the server or the mobile handset or *vice versa.*

The certificate authority may be managed or provided by the same entity managing or providing the remotely accessible server (110), or may be an independent or external certificate authority.

In this embodiment, both the remotely accessible server (110) and the mobile handset (120) have been provided with a digital certificate by the certificate authority. The mobile handset has a digital user certificate (170), while the remotely accessible server (110) has a digital server certificate (180), as shown in Figure 1A.

A user private (172) and public (173) cryptographic key pair is associated with the mobile handset (120), and a server private (182) and public (183) cryptographic key pair is associated with the remotely accessible server (110).

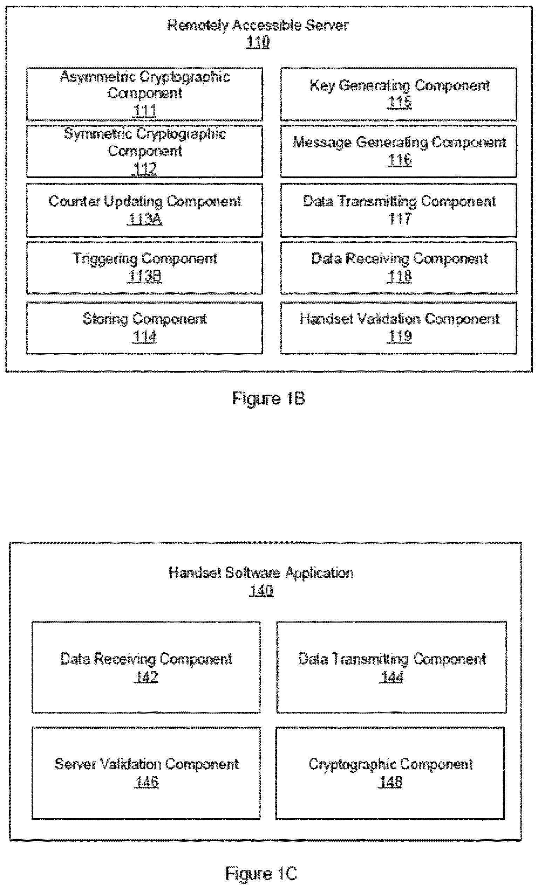

As shown in Figure 1B, an embodiment of the remotely accessible server (110) may include one or more of an asymmetric cryptographic component (111) for performing asymmetric encryption and decryption, a symmetric cryptographic component (112) for performing symmetric encryption and decryption, a counter updating component (113A), a triggering component (113B), a storing component (114), a key generating component (115), a message generating component (116), a data transmitting component (117), a data receiving component (118), and a handset validation component (119).

As illustrated in Figure 1C, an embodiment of the handset software application (140) may include one or more of a data receiving component (142), a data transmitting component (144), a server validation component (146), and a cryptographic component (148) for performing asymmetric and/or symmetric encryption and decryption.

The user key pair (172, 173) may be calculated by the certificate authority and provided to the mobile handset (120). This will mainly happen in cases where the handset (120) itself does not have enough processing power to calculate the key pair itself. The user key pair (172, 173) may also be calculated at the handset (120) itself.

The user private key (172) may typically be sent to the mobile handset (120) over a secure channel, while the associated user public key (173) may be included in the digital user certificate (170) and be transmitted to the handset (120) separately. In some embodiments, after a key pair is generated, either by the mobile handset (120) or at a remote entity which transmits the key pair to the mobile handset (120), a certificate signing request is transmitted to the certificate authority for signature.

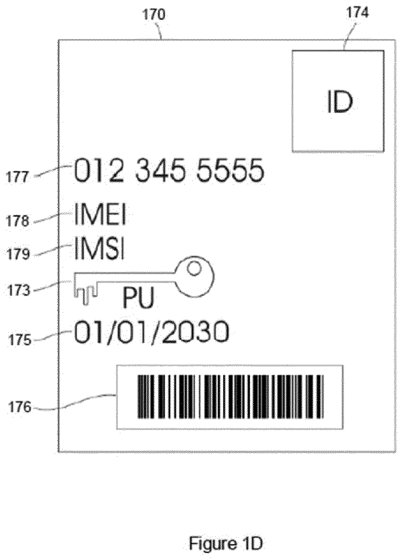

An exemplary digital user certificate (170) is illustrated in Figure 1D. In addition to the user public key (173) and a certificate authority signature (176), the certificate (170) may also contain an identifier (174) which is uniquely associated with the mobile handset (120). The identifier (174) may be any unique key which is issued by the certificate authority. In the current embodiment of the invention, the identifier (174) is a sequential number generated by the certificate authority. It should be appreciated that due to the sequential nature of the identifier (174), a one-to-one relationship exists between each certificate issued by the certificate authority and a mobile handset. In addition to the above, the certificate (170) may also include other information such as, for example, a mobile phone number (177) associated with a Subscriber Identity Module (SIM) card of the handset (120), the handset's International Mobile Station Equipment Identity (IMEI) (178) and/or International Mobile Subscriber Identity (IMSI) (179) numbers as well as a certificate expiry date (175).

The format of the digital server certificate (180) may be similar to that of the digital user certificate (170) and includes the server public key (183). The corresponding server private key (182) is typically saved in a secure location in the remotely accessible server (110).

Each time the mobile handset (120) and the remotely accessible server (110) initiate communications between them, it will start a certificate exchange process, whereby the digital user certificate (170) is sent to the server (110), and the digital server certificate (180) is sent to the handset (120). Both parties will then validate the content of the received certificates (170, 180), and the digital signature, to make sure that the details in the certificates (170, 180) was not tampered with. This validation may be done by using a certificate authority digital certificate that is part of both the handset software application (140) and server application or the respective encryption modules. Knowledge of the certificate authority public key may, however, be sufficient to enable validation of the respective certificates to be conducted. It should be appreciated that the certificate authority digital certificate may include the certificate authority public key and that the user and server side applications will therefore use the certificate authority public key to decrypt the signed certificates (170, 180). If the certificates are not capable of being decrypted with the certificate authority public key, it will be apparent that they were not signed with the certificate authority private key, and are accordingly not authentic.

At this point, both parties can be sure they are talking to the intended recipients. It should be appreciated that, after the certificate exchange, the handset (120) will be in possession of the server public key (183) and the remotely accessible server (110) will be in possession of the handset public key (173).

The handset identifier (174) included in the digital user certificate (170) may also be used by the remotely accessible server (110) to uniquely identify the handset (120) and, accordingly, the user. The database (160) may include all the identifiers issued to clients, and the remotely accessible server (110) may choose to only communicate with handsets included in the database.

The digital user certificate (170) is therefore used not only to authenticate the communication channel (150) between the handset (120) and the remotely accessible server (110), but also to uniquely identify the handset (120) that is attempting to communicate with the remotely accessible server (110).

It should be appreciated that the handset software application (140) may also validate that the server (110) is the rightful owner of the certificate it sent, simply by virtue of the fact that the handset software application (140) is capable of decrypting communication sent to it by the server (110). Only communications encrypted with the server private key (182) will be capable of being decrypted with the server public key (183).

The remotely accessible server (110) further stores, in association with an identifier of the user (130) and/or the handset (120), a counter value and a static seed value. These values may typically be stored in the database (160). It being accepted of course that appropriate measures will be taken to protect the database and prevent unauthorised access to it.

The system (100) described above with reference to Figures 1 A to 1 D is usable in a method of establishing a secure communication channel (190) between the mobile handset (120) and the remotely accessible server (110) over which data is both asymmetrically encrypted using the user and server key pairs and symmetrically encrypted using a dynamic symmetric key (192), which will be described in greater detail below.

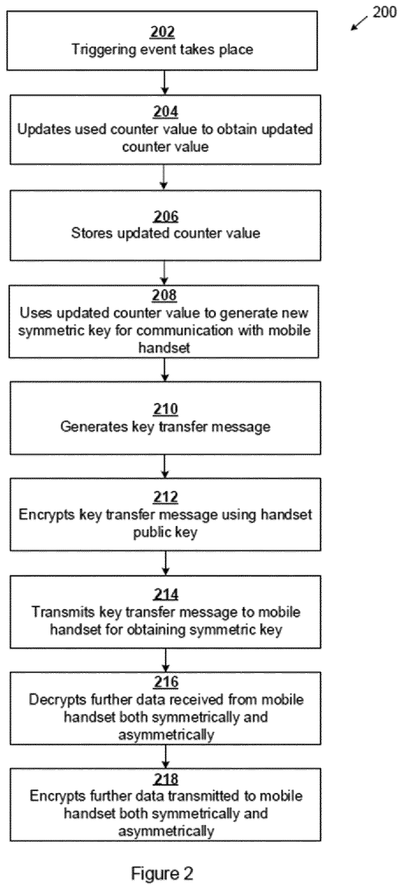

The flow diagram (200) of Figure 2 illustrates steps conducted at the remotely accessible server (110) in a method of establishing a secure communication channel according to the invention.

At a first stage (202), and typically during or after one or more handshake steps such as the certificate exchange described above, a triggering event takes place. The triggering event may be either a mobile handset initiation event or a server initiation event.

In this embodiment, the triggering event is an asymmetric cryptographic operation performed on data communicated between the remotely accessible server (110) and the mobile handset (120). In other words, the mobile handset initiation event may for example occur when the remotely accessible server (110) receives a communication from the mobile handset (120) which is encrypted asymmetrically using the server public key (183), or when it receives a communication from the mobile handset (120) which is digitally signed using the handset private key (172), and the server initiation event may for example occur when the remotely accessible server (110) transmits a communication to the mobile handset (120) that is encrypted using the handset public key (173). The remotely accessible server (110) may be notified of the triggering event at its triggering component (113B).

The triggering event is not limited to asymmetric cryptographic operations. The triggering event may include the one or more handshake steps between the remotely accessible server (110) and the mobile handset (120). It may also be any communication transmitted from the mobile handset (120) to the remotely accessible server (110), or from the remotely accessible server (110) to the mobile handset (120). In some embodiments, the triggering event occurs when a communication transmitted from the mobile handset (120) to the remotely accessible server (110), or from the remotely accessible server (110) to the mobile handset (120), is encrypted using a previously used symmetric key calculated using a used counter value, as will be described in more detail below.

In some embodiments, the triggering event is the commencement of a new communication session between the mobile handset (120) and the remotely accessible server (110). The triggering event may also include a plurality or combination of the above.

The one or more handshake steps mentioned above may typically include the certificate exchange process. The remotely accessible server (110) therefore receives the digital user certificate (170) from the mobile handset using the server software application installed on the remotely accessible server (110) and validates the digital user certificate by utilizing functionality provided by the encryption module distributed by the certificate authority. The handset validation component (119) of the remotely accessible server (110) may be used for validating the digital user certificate (170). The encryption module provided by the certificate authority may be included in the handset validation component (119).

The remotely accessible server (110) also transmits the digital server certificate (180) to the mobile handset (120) for validation of the remotely accessible server (110), validation being conducted using the handset software application (140) installed on the mobile handset utilizing functionality provided by the encryption module provided by the certificate authority. The server validation component (146) may typically be used for validating the digital server certificate (180). The encryption module provided by the certificate authority may be included in the server validation component (146). Successful validation may, in some embodiments, be a triggering event.

The triggering event triggers the counter value to be updated. At a next stage (204), the remotely accessible server (110) then deterministically updates a used counter value to obtain an updated counter value. The used counter value was used to generate a previously used symmetric key for encrypting communications between the remotely accessible server (110) and the mobile handset (120). In this embodiment, the used counter value was used together with the static seed value to generate the previously used symmetric key. It should be appreciated that "deterministic" updating refers to updating the used counter value in any non-random manner, typically by way of incrementing the used counter value. The used counter value may be updated at the counter updating component (112).

At a next stage (206), the updated counter value is stored using the storing component (114). The updated counter value may be stored in the database (160) such that it is associated with the mobile handset (120) and/or the user (130). The remotely accessible server (110) then, at a next stage (208), uses the updated counter value to generate a new symmetric key (192) for communication with the mobile handset (120). The symmetric key (192) may be generated at the key generating component (115).

In this embodiment, the updated counter value is used together with the static seed value in a one-time password algorithm in order to generate the new symmetric key (192). An exemplary one-time password algorithm is Initiative For Open Authentication (OATH) HOTP. The counter value is, in such a case, used as the counter in the algorithm, while the static seed value is used as the key.

Both the seed value and counter value are known only to the remotely accessible server (110), and are therefore unknown to the mobile handset (120) and are never transmitted to the handset (120). Any other suitable algorithm may be used to generate the symmetric key, wherein at least a counter value of the algorithm is known only to the remotely accessible server (110) and not at the handset (120).

The static seed value typically remains the same for a particular handset. If communications are handset-initiated, the seed may start off having a "NULL" value. This means that no symmetric encryption or decryption is performed the first time the mobile handset communicates with the server. If communications are server-initiated, the seed may already have a value such that a symmetric key is calculated and included in the first asymmetrically encrypted payload transmitted to the mobile handset.

At a next stage (210), the remotely accessible server (110) generates a key transfer message at its message generating component (116), the key transfer message including the symmetric key (192) generated using the updated counter value. The key transfer message is then asymmetrically encrypted at a next stage (212), using the handset public key (173).

In the case where updating of the used counter value is triggered by a mobile handset initiation event such as the mobile handset (120) initiating a new communication session, the key transfer message is typically sent as an acknowledgement message to the mobile handset (120) in response to the mobile handset initiation event. In the case where updating of the used counter value is triggered by a server initiation event, the key transfer message may be transmitted to the mobile handset (120) as part of any asymmetrically encrypted payload to ensure that the mobile handset (120) receives the symmetric key (192) for use in subsequent communications.

The remotely accessible server (110) then, at a next stage (214), uses its data transmitting component (117) to transmit the key transfer message to the mobile handset (120) such that the mobile handset (120) is capable of using the handset private key (172) corresponding to the handset public key (173) to decrypt the key transfer message and obtain the symmetric key (192), typically using the cryptographic component (148) of its handset software application (140).

Once the mobile handset (120) has obtained the symmetric key (192), at a next stage (216), a secure communication channel (190) is established wherein data transmitted to the remotely accessible server (110), and typically received at its data receiving component (118), is decrypted both symmetrically by using both the symmetric key (192) and asymmetrically using the server private key (182).

Similarly, at a next stage (218), data transmitted over the secure communication channel (190) to the mobile handset (120) is then encrypted both symmetrically by using the symmetric key (192) and asymmetrically using the handset public key (183).

The symmetric key (192) is used for encryption until a further triggering event takes place, which again causes the counter value to be updated and a new symmetric key to be calculated, which is to be communicated to the mobile handset (120) as described above. In this embodiment, the symmetric key used is dynamic in that any cryptographic operation performed on data transmitted between the remotely accessible server (110) and the mobile handset (120) causes the symmetric key to be updated.

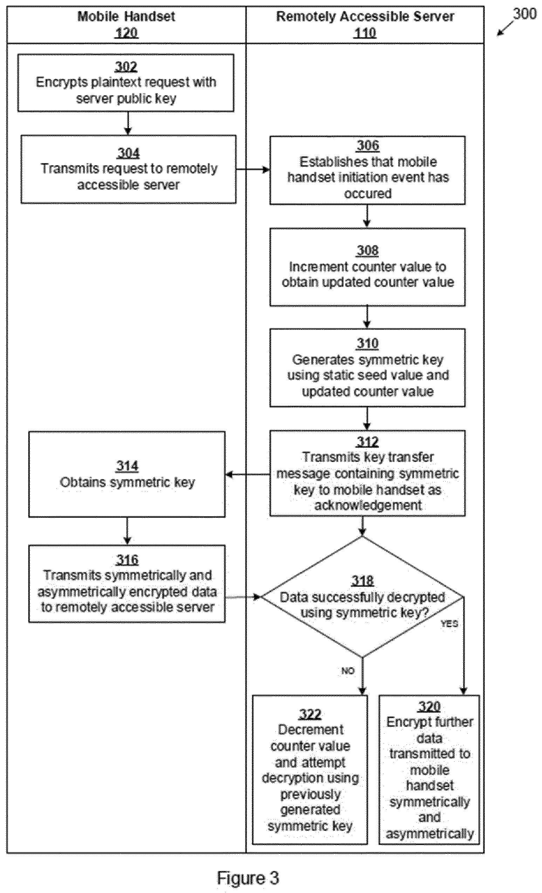

In the example illustrated by the swim-lane flow diagram (300) of Figure 3, the mobile handset (120) initiates communication with the remotely accessible server (110).

At a first stage (302), the mobile handset (120) generates a plaintext request, for example a transaction request relating to a financial transaction or access to a financial account, and asymmetrically encrypts it using the server public key (183). This request is then transmitted to the remotely accessible server (110) over the channel (150) shown in Figure 1, at a next stage (304). This may be preceded by the handshake steps described above in order for the server (110) and handset (120) to ensure they are communicating with the correct party.

The remotely accessible server (110), at a next stage (306), receives the request and determines that a mobile handset initiation event has occurred as a result of the asymmetric cryptographic operation performed by the mobile handset (120). In other embodiments, the mobile handset initiation event may, for example, be defined as the commencement of a new communication session between the parties.

At a next stage (308), the counter value is incremented to yield an updated counter value. It should be appreciated that updating of the counter value can also be triggered by the communication of data which is both symmetrically and asymmetrically encrypted, as the asymmetric encryption will prompt the remotely accessible server (110) to generate a new symmetric key for further symmetric encryption. Furthermore, updating of the counter value can be triggered by a digital signing operation performed by the mobile handset (120). The secure communication channel of the invention may also be used to securely transmit such signatures.

At a next stage (310), a new symmetric key is generated, preferably using the static seed value and updated counter value in a HMAC-based one-time password algorithm such as OATH HOTP or another one-time password algorithm. The remotely accessible server (110) then, at a next stage (312) transmits a key transfer message to the mobile handset (140), which it can receive at its data receiving component (142) and asymmetrically decrypt to obtain the generated symmetric key at stage (314).

The mobile handset (140) can then, instead of only encrypting plaintext with the server public key (183), first encrypt the plaintext using the symmetric key in a symmetric algorithm such as Advanced Encryption Standard (AES)-128, and then further encrypt the symmetrically encrypted plaintext asymmetrically using the server public key (183) to yield the final ciphertext. The ciphertext is transmitted to the remotely accessible server (110) at a next stage (316).

At a next stage (318), the remotely accessible server (110) is thus required to first asymmetrically decrypt and then symmetrically decrypt the ciphertext received from the mobile handset (120). If encryption is successful, the remotely accessible server (110) proceeds as described above and typically also encrypts at least some further data it transmits to the mobile handset (140), firstly using the symmetric key, and also asymmetrically using the handset public key (173).

The remotely accessible server (110) may typically make use of one or more hardware security modules to perform asymmetric cryptographic operations. In such cases, data may simply be run through a symmetrical cipher before or after it is run through a hardware security module to enable successful cryptographic operations thereon.

The server (110) is configured to, if symmetric decryption of further data using the symmetric key is unsuccessful, at a next stage (322) attempt to decrypt the further data using the previously used symmetric key generated using the used counter value instead of using the symmetric key generated using the updated counter value, thereby accounting for the possibility of the key transfer message not being successfully transmitted to or obtained at the mobile handset. This may be the case when, for example, a packet of data containing the latest symmetric key did not successfully reach the mobile handset (120) over a particular wireless network.

In the case where updating of the counter value involves incrementing it, the server (110) will simply appropriately decrement the counter value and may also store the obtained counter value instead of the updated counter value.

It should be appreciated that although the system provided is described as including one remotely accessible server and one mobile handset, it is described as such primarily for illustrative purpose. The system may include a plurality of users each having a mobile handset in communication with the remotely accessible server. Each handset and/or user may then have a specific static seed value and/or counter value associated therewith at any given time, which is updated and stored by the server as herein described. There may also be a number of remotely accessible servers performing the functions described above. The system and method of the invention therefore enables multiple, distinct secure communication channels to be established between the server or servers and mobile handsets of users at any given time.

The term "handset software application" is not limited to a mobile software application and may include applications provided by a software development kit (SDK).

It is foreseeable that the certificate authority may periodically issue new certificates to all the handsets and/or servers to which it has previously issued certificates. This may be done as frequently as required, but preferably on an annual basis. The issuing of new user certificates may then also include the calculation and issuing of new user private/public key pairs in cases where the certificate authority calculated these on behalf of the mobile handset.

The above description is by way of example only and it will be appreciated that numerous modifications may be made to the embodiments described without departing from the scope of the invention. In particular, the system architecture, method steps and data flow as described may be conducted in any number of different ways and in any workable order.

The system and method of the invention provides a way of establishing a secure communication channel between a mobile handset, in particular a mobile phone, and a remotely accessible server such as an online application server, by ensuring that sensitive data such as data relating to financial transactions or access to a financial account is transmitted over a channel which is both symmetrically and asymmetrically encrypted.

The invention may provide a secure way of transacting from mobile phones with online application servers, thus making it possible and safe for service providers, such as banks, to allow the use of the full functionality of their online services from mobile phones and other mobile handsets.

The invention provides a handset software application configured to be installed on a mobile handset to receive a key transfer message and asymmetrically decrypt the key transfer message to obtain a symmetric key therefrom. This symmetric key is dynamic and changes each time a triggering event takes place.

A new symmetric key may therefore be calculated at the server for each new communication session or may change during a communication session, for example as a result of asymmetric encryption as described, without the mobile handset being exposed to the values used to calculate the symmetric key. In this way, even if a miscreant intercepts one such symmetric key, it may have already become unusable or may only be of use for a short period of time.

It is envisaged that, if the remotely accessible server establishes that a communicating party is attempting to reuse an old or previously used symmetric key, the remotely accessible server may block communications from a mobile handset of that party or otherwise restrict the communicating party from accessing an application or portal. The remotely accessible server may, for example, block or revoke a digital certificate associated with such a party or the mobile handset of the party.

The server may thus, in response to determining that the previously used symmetric key or a symmetric key used or generated prior to the previously used symmetric key was used to encrypt data received from the mobile handset instead of using the symmetric key generated using the updated counter value, associate the mobile handset with a potential security threat. Any suitable action may be taken before blocking or restricting the mobile handset or user associated with the potential security threat. The user may, for example, be required to enter a passcode or perform some form of out-of-band authentication. If authentication succeeds, the server may accept that there is no security threat and that the key transfer message containing the most recent symmetric key was simply not successfully transmitted to or obtained at the mobile handset, and may allow communications to continue normally.

It is also envisaged that the remotely accessible server or the entity controlling the remotely accessible server may not only store details such as the handset public key and the current or latest symmetric key, but also maintain a record of a plurality of previously used symmetric keys. For example, all of the symmetric keys generated and/or used over a period of one year in relation to a particular user or mobile handset may be stored by the remotely accessible server or the controlling entity.

Maintaining such records enables previous communications between a mobile handset and the remotely accessible server to be decrypted if necessary. This may be required, for example, by financial, banking or other security regulations. It should be appreciated that the actual symmetric keys themselves may not need to be stored, as the counter value may simply be reduced in order to recalculate previously used symmetric keys.

Whereas known methods of generating symmetric keys may involve both the mobile handset and the remotely accessible server being required to possess a seed value and/or a counter value at some stage, the present disclosure permits these values to be known only at the server, thereby possibly further reducing the risk that these values may be obtained and fraudulently used.

It should be appreciated that the disclosure extends to a computer program product for establishing a secure communication channel between a mobile handset and a remotely accessible server, the computer program product comprising a computer-readable medium having stored computer-readable program code for performing the steps of: deterministically updating a used counter value to yield an updated counter value, the used counter value having been used to generate a previously used symmetric key for encrypting communications between the remotely accessible server and the mobile handset; storing the updated counter value; using the updated counter value to generate a symmetric key; generating a key transfer message including the symmetric key generated using the updated counter value; asymmetrically encrypting the key transfer message using a handset public key associated with the mobile handset; transmitting the key transfer message to the mobile handset such that the mobile handset is capable of using a handset private key corresponding to the handset public key to decrypt the key transfer message and obtain the symmetric key; decrypting further data received from the mobile handset asymmetrically using a server private key associated with the remotely accessible server and symmetrically using the symmetric key; and encrypting further data communicated to the mobile handset symmetrically using the symmetric key and asymmetrically using the handset public key. The computer-readable medium may be a non-transitory computer-readable medium, the computer-readable program code being executable by a processing circuit.

## Claims

1. A method (200) of establishing a secure communication channel between a mobile handset and a remotely accessible server, the method being carried out at the remotely accessible server and comprising the steps of:
deterministically updating a used counter value to yield an updated counter value (204), the used counter value having been used to generate a previously used symmetric key for encrypting communications between the remotely accessible server and the mobile handset;
storing the updated counter value (206);
using the updated counter value to generate a symmetric key (208);
generating a key transfer message including the symmetric key generated using the updated counter value (210);
asymmetrically encrypting the key transfer message using a handset public key associated with the mobile handset (212);
transmitting the key transfer message to the mobile handset such that the mobile handset is capable of using a handset private key corresponding to the handset public key to decrypt the key transfer message and obtain the symmetric key (214),
**characterised in that** the method further comprises the steps of:
decrypting further data received from the mobile handset asymmetrically using a server private key associated with the remotely accessible server and symmetrically using the symmetric key (216);
encrypting further data communicated to the mobile handset symmetrically using the symmetric key and asymmetrically using the handset public key;
determining that the previously used symmetric key or a symmetric key used or generated prior to the previously used symmetric key was used to encrypt data received from the mobile handset instead of using the symmetric key generated using the updated counter value; and
associating the mobile handset with a potential security threat.

2. A method as claimed in claim 1, wherein the step of deterministically updating the used counter value is triggered by one or both of a mobile handset initiation event and a server initiation event.

3. A method as claimed in claim 2, wherein the mobile handset initiation event or the server initiation event includes an asymmetric cryptographic operation performed on data communicated between the remotely accessible server and the mobile handset.

4. A method as claimed in claim 2, wherein the mobile handset initiation event includes one or more of: any communication transmitted from the mobile handset to the remotely accessible server; any communication transmitted from the remotely accessible server to the mobile handset; receiving a communication from the mobile handset which is encrypted asymmetrically using the server public key; receiving a communication from the mobile handset which is digitally signed using the handset private key; and receiving a communication from the mobile handset which is encrypted symmetrically using the previously used symmetric key.

5. A method as claimed in claim 2, wherein the server initiation event includes one or more of: one or more handshake steps between the remotely accessible server and the mobile handset, transmitting a communication to the mobile handset which is encrypted asymmetrically using the handset public key, and transmitting a communication to the mobile handset which is encrypted symmetrically using the previously used symmetric key.

6. A method as claimed in any one of the preceding claims, wherein the step of deterministically updating the used counter value is triggered when a new communication session between the remotely accessible server and the mobile handset commences.

7. A method as claimed in any one of the preceding claims, wherein the used counter value has been used together with a static seed value to generate the previously used symmetric key, and wherein the step of using the updated counter value to generate a symmetric key includes using the updated counter value together with the static seed value.

8. A method as claimed in claim 7, wherein both the counter value and the static seed value are unknown to the mobile handset.

9. A method as claimed in claim 7 or claim 8, wherein the symmetric key is generated using a one-time password algorithm, and wherein the counter value and the static seed value are respectively used as a counter and a key in the algorithm.

10. A method as claimed in any one of the preceding claims, further including at least one handshake step carried out between the remotely accessible server and the mobile handset, the at least one handshake step including one or both of:
receiving a digital user certificate from the mobile handset using a server software application installed on the remotely accessible server and validating the digital user certificate by utilizing functionality provided by an encryption module distributed by a certificate authority, the digital user certificate having been issued to the mobile handset by the certificate authority and including the handset public key and an identifier uniquely associated with the mobile handset; and
transmitting a digital server certificate to the mobile handset for validation of the remotely accessible server, validation of the digital server certificate being conducted using a handset software application installed on the mobile handset utilizing functionality provided by an encryption module provided by the certificate authority, the digital server certificate having been issued to the remotely accessible server by the certificate authority and including the server public key corresponding to the server private key.

11. A method as claimed in any one of the preceding claims, further including the step of: if symmetric decryption of further data using the symmetric key is unsuccessful, attempting to decrypt the further data using the previously used symmetric key generated using the used counter value instead of using the symmetric key generated using the updated counter value.

12. A system (100) for establishing a secure communication channel (190) between a mobile handset (120) and a remotely accessible server (110), the system comprising:
a handset software application (140) configured to be installed on a mobile handset (120) to receive a key transfer message and asymmetrically decrypt the key transfer message to obtain a symmetric key (192) therefrom, the mobile handset (120) having associated therewith a handset public key (173) and a corresponding handset private key (172); and
a remotely accessible server (110) including:
an asymmetric cryptographic component (111) for performing asymmetric encryption and decryption;
a symmetric cryptographic component (112) for performing symmetric encryption and decryption;
a counter updating component (113A) for deterministically updating a used counter value to yield an updated counter value, the used counter value having been used to generate a previously used symmetric key for encrypting communications between the remotely accessible server (110) and the mobile handset (120);
a storing component (114) for storing the updated counter value;
a key generating component (115) for using the updated counter value to generate a symmetric key (192);
a message generating component (116) for generating a key transfer message including the symmetric key (192) generated using the updated counter value;
a data transmitting component (117) for transmitting data to the mobile handset (120); and
a data receiving component (118) for receiving data from the mobile handset (120), wherein the remotely accessible server (110) is configured to: asymmetrically encrypt the key transfer message using the handset public key (173); transmit the key transfer message to the mobile handset (120) such that the mobile handset (120) is capable of using the handset private key (172) corresponding to the handset public key (173) to decrypt the key transfer message and obtain the symmetric key (192); decrypt further data received from the mobile handset (120) asymmetrically using a server private key (182) associated with the remotely accessible server (110) and symmetrically using the symmetric key (192); encrypt further data communicated to the mobile handset (120) symmetrically using the symmetric key (192) and asymmetrically using the handset public key (173); determine that the previously used symmetric key or a symmetric key used or generated prior to the previously used symmetric key was used to encrypt data received from the mobile handset instead of using the symmetric key generated using the updated counter value; and associate the mobile handset with a potential security threat.

13. A system as claimed in claim 12, wherein the remotely accessible server (110) further includes a triggering component (113B) for triggering deterministic updating of a used counter value, deterministic updating of a used counter value being triggered by one or both of a mobile handset initiation event and a server initiation event.

14. A system as claimed in claim 13, wherein the handset software application (140) further includes a server validation component (146) for validating a digital server certificate (180) transmitted from the remotely accessible server (110) to the mobile handset (120), validation of the digital server certificate (180) being conducted utilizing functionality provided by an encryption module provided by a certificate authority, the digital server certificate (180) having been issued to the remotely accessible server (110) by the certificate authority and including the server public key (183) corresponding to the server private key (182).

15. A computer program product for establishing a secure communication channel (190) between a mobile handset (120) and a remotely accessible server (110), the computer program product comprising a computer-readable medium having stored computer-readable program code that causes a computer executing the program to perform the steps of:
deterministically updating a used counter value to yield an updated counter value (204), the used counter value having been used to generate a previously used symmetric key for encrypting communications between the remotely accessible server and the mobile handset;
storing the updated counter value (206);
using the updated counter value to generate a symmetric key (208);
generating a key transfer message including the symmetric key generated using the updated counter value (210);
asymmetrically encrypting the key transfer message using a handset public key associated with the mobile handset (212);
transmitting the key transfer message to the mobile handset such that the mobile handset is capable of using a handset private key corresponding to the handset public key to decrypt the key transfer message and obtain the symmetric key (214);
**characterised in that** the program code causes a computer executing the program to further perform the steps of:
decrypting further data received from the mobile handset asymmetrically using a server private key associated with the remotely accessible server and symmetrically using the symmetric key (216);
encrypting further data communicated to the mobile handset symmetrically using the symmetric key and asymmetrically using the handset public key, wherein the computer-readable medium is a non-transitory computer-readable medium, the computer-readable program code being executable by a processing circuit (218);
determining that the previously used symmetric key or a symmetric key used or generated prior to the previously used symmetric key was used to encrypt data received from the mobile handset instead of using the symmetric key generated using the updated counter value; and
associating the mobile handset with a potential security threat.

## Patentansprüche

1. Verfahren (200) zum Einrichten eines sicheren Kommunikationskanals zwischen einem mobilen Handapparat und einem fernzugänglichen Server, wobei das Verfahren am fernzugänglichen Server durchgeführt wird und die folgenden Schritte aufweist:
deterministisches Aktualisieren eines verwendeten Zählerwertes, um einen aktualisierten Zählerwert (204) zu ergeben, wobei der verwendete Zählerwert zum Erzeugen eines zuvor verwendeten symmetrischen Schlüssels zur Verschlüsselung von Kommunikation zwischen dem fernzugänglichen Server und dem mobilen Handapparat verwendet wurde;
Speichern des aktualisierten Zählerwerts (206);
Verwenden des aktualisierten Zählerwerts zum Erzeugen eines symmetrischen Schlüssels (208);
Erzeugen einer Schlüsselübergabenachricht, die den unter Verwendung des aktualisierten Zählerwerts (210) erzeugten symmetrischen Schlüssel beinhaltet;
asymmetrisches Verschlüsseln der Schlüsselübergabenachricht unter Verwendung eines dem mobilen Handapparat (212) zugeordneten öffentlichen Schlüssels des Handapparats;
Übertragen der Schlüsselübergabenachricht an den mobilen Handapparat, so dass der mobile Handapparat einen privaten Schlüssel des Handapparats, der dem öffentlichen Schlüssel des Handapparats entspricht, zum Entschlüsseln der Schlüsselübergabenachricht und zum Erhalten des symmetrischen Schlüssels (214) verwenden kann,
**dadurch gekennzeichnet, dass** das Verfahren ferner die folgenden Schritte aufweist:
Entschlüsseln weiterer von dem mobilen Handapparat empfangener Daten, asymmetrisch unter Verwendung eines privaten Schlüssels des Servers, der dem fernzugänglichen Server zugeordnet ist, und symmetrisch unter Verwendung des symmetrischen Schlüssels (216);
Verschlüsseln weiterer dem mobilen Handapparat übermittelter Daten, symmetrisch unter Verwendung des symmetrischen Schlüssels und asymmetrisch unter Verwendung des öffentlichen Schlüssels des Handapparats;
Bestimmen, dass der zuvor verwendete symmetrische Schlüssel oder ein symmetrischer Schlüssel, der verwendet oder erzeugt wurde, bevor der zuvor verwendete symmetrische Schlüssel verwendet wurde, zum Verschlüsseln von von dem mobilen Handapparat empfangenen Daten verwendet wurde, anstatt den symmetrischen Schlüssel zu verwenden, der unter Verwendung des aktualisierten Zählerwerts erzeugt wurde; und
Assoziieren des mobilen Handapparats mit einer potentiellen Sicherheitsbedrohung.

2. Verfahren nach Anspruch 1, wobei der Schritt des deterministischen Aktualisierens des verwendeten Zählerwerts durch ein Initiierungsereignis des mobilen Handapparats und/oder ein Serverinitiierungsereignis ausgelöst wird.

3. Verfahren nach Anspruch 2, wobei das Initiierungsereignis des mobilen Handapparats oder das Serverinitiierungsereignis einen asymmetrischen kryptographischen Vorgang beinhaltet, der an zwischen dem fernzugänglichen Server und dem mobilen Handapparat übermittelten Daten durchgeführt wird.

4. Verfahren nach Anspruch 2, wobei das Initiierungsereignis des mobilen Handapparats eines oder mehr der Folgenden beinhaltet: eine von dem mobilen Handapparat an den fernzugänglichen Server übertragene Mitteilung; eine von dem fernzugänglichen Server an den mobilen Handapparat übertragene Mitteilung; Empfangen einer Mitteilung von dem mobilen Handapparat, die unter Verwendung des öffentlichen Schlüssels des Servers asymmetrisch verschlüsselt wurde; Empfangen einer Mitteilung von dem mobilen Handapparat, die unter Verwendung des privaten Schlüssels des Handapparats mit einer digitalen Signatur versehen wurde; und Empfangen einer Mitteilung von dem mobilen Handapparat, die unter Verwendung des zuvor verwendeten symmetrischen Schlüssels symmetrisch verschlüsselt wurde.

5. Verfahren nach Anspruch 2, wobei das Serverinitiierungsereignis eines oder mehr der Folgenden beinhaltet: einen oder mehr Handshake-Schritte zwischen dem fernzugänglichen Server und dem mobilen Handapparat, Übertragen einer Mitteilung an den mobilen Handapparat, die unter Verwendung des öffentlichen Schlüssels des Handapparats asymmetrisch verschlüsselt wurde, und Übertragen einer Mitteilung an den mobilen Handapparat, die unter Verwendung des zuvor verwendeten symmetrischen Schlüssels symmetrisch verschlüsselt wurde.

6. Verfahren nach einem der vorhergehenden Ansprüche, wobei der Schritt des deterministischen Aktualisierens des verwendeten Zählerwerts ausgelöst wird, wenn eine neue Kommunikationssitzung zwischen dem fernzugänglichen Server und dem mobilen Handapparat beginnt.

7. Verfahren nach einem der vorhergehenden Ansprüche, wobei der verwendete Zählerwert zusammen mit einem statischen Seed-Wert verwendet wurde, um den zuvor verwendeten symmetrischen Schlüssel zu erzeugen, und wobei der Schritt des Verwendens des aktualisierten Zählerwerts zum Erzeugen eines symmetrischen Schlüssels das Verwenden des aktualisierten Zählerwerts zusammen mit dem statischen Seed-Wert beinhaltet.

8. Verfahren nach Anspruch 7, wobei sowohl der Zählerwert als auch der statische Seed-Wert dem mobilen Handapparat unbekannt sind.

9. Verfahren nach Anspruch 7 oder Anspruch 8, wobei der symmetrische Schlüssel unter Verwendung eines einmaligen Passwortalgorithmus erzeugt wird und wobei der Zählerwert und der statische Seed-Wert in dem Algorithmus als ein Zähler bzw. ein Schlüssel verwendet werden.

10. Verfahren nach einem der vorhergehenden Ansprüche, das ferner wenigstens einen Handshake-Schritt beinhaltet, der zwischen dem fernzugänglichen Server und dem mobilen Handapparat durchgeführt wird, wobei der wenigstens eine Handshake-Schritt eines der Folgenden oder beide beinhaltet:
Empfangen eines digitalen Benutzerzertifikats von dem mobilen Handapparat unter Verwendung einer Server-Softwareanwendung, die in dem fernzugänglichen Server installiert ist, und Validieren des digitalen Benutzerzertifikats unter Nutzung von Funktionalität, die von einem von einer Zertifikatautorität verbreiteten Verschlüsselungsmodul bereitgestellt wird, wobei das digitale Benutzerzertifikat von der Zertifikatautorität auf den mobilen Handapparat ausgestellt wurde und den öffentlichen Schlüssel des Handapparats und einen dem mobilen Handapparat eindeutig zugeordneten Identifikator beinhaltet; und
Übertragen eines digitalen Serverzertifikats zu dem mobilen Handapparat zur Validierung des fernzugänglichen Servers, wobei die Validierung des digitalen Serverzertifikats unter Verwendung einer in dem mobilen Handapparat installierten Handapparatsoftwareanwendung durchgeführt wird, die Funktionalität nutzt, die von einem von der Zertifikatautorität bereitgestellten Verschlüsselungsmodul bereitgestellt wird, wobei das digitale Serverzertifikat von der Zertifikatautorität auf den fernzugänglichen Server ausgestellt wurde und den dem privaten Schlüssel des Servers entsprechenden öffentlichen Schlüssels des Servers beinhaltet.

11. Verfahren nach einem der vorhergehenden Ansprüche, das ferner den folgenden Schritt beinhaltet: Versuchen, falls die symmetrische Entschlüsselung weiterer Daten unter Verwendung des symmetrischen Schlüssels erfolglos ist, die weiteren Daten unter Verwendung des zuvor verwendeten symmetrischen Schlüssels, der unter Verwendung des verwendeten Zählerwerts erzeugt wurde, zu entschlüsseln, anstatt den symmetrischen Schlüssel zu verwenden, der unter Verwendung des aktualisierten Zählerwerts erzeugt wurde.

12. System (100) zum Einrichten eines sicheren Kommunikationskanals (190) zwischen einem mobilen Handapparat (120) und einem fernzugänglichen Server (110), wobei das System Folgendes aufweist:
eine Handapparat-Softwareanwendung (140), die konfiguriert ist, um in einem mobilen Handapparat (120) installiert zu werden, um eine Schlüsselübergabenachricht zu empfangen und die Schlüsselübergabenachricht asymmetrisch zu entschlüsseln, um daraus einen symmetrischen Schlüssel (192) zu erhalten, wobei dem mobilen Handapparat (120) ein öffentlicher Schlüssel des Handapparats (173) und ein entsprechender privater Schlüssel des Handapparats (172) zugeordnet ist; und
einen fernzugänglichen Server (110), der Folgendes aufweist:
eine asymmetrische kryptographische Komponente (111) zum Durchführen asymmetrischer Verschlüsselung und Entschlüsselung;
eine symmetrische kryptographische Komponente (112) zum Durchführen symmetrischer Verschlüsselung und Entschlüsselung;
eine Zähleraktualisierungskomponente (113A) zum deterministischen Aktualisieren eines verwendeten Zählerwertes, um einen aktualisierten Zählerwert zu ergeben, wobei der verwendete Zählerwert zum Erzeugen eines zuvor verwendeten symmetrischen Schlüssels zur Verschlüsselung von Kommunikation zwischen dem fernzugänglichen Server (110) und dem mobilen Handapparat (120) verwendet wurde;
eine Speicherkomponente (114) zum Speichern des aktualisierten Zählerwerts;
eine Schlüsselerzeugungskomponente (115) zum Verwenden des aktualisierten Zählerwerts zum Erzeugen eines symmetrischen Schlüssels (192);
eine Nachrichtenerzeugungskomponente (116) zum Erzeugen einer Schlüsselübergabenachricht, die den unter Verwendung des aktualisierten Zählerwerts erzeugten symmetrischen Schlüssel (192) beinhaltet;
eine Datenübertragungskomponente (117) zum Übertragen von Daten zu dem mobilen Handapparat (120) und
eine Datenempfangskomponente (118) zum Empfangen von Daten von dem mobilen Handapparat (120), wobei der fernzugängliche Server (110) konfiguriert ist zum:
asymmetrischen Verschlüsseln der Schlüsselübergabenachricht unter Verwendung des öffentlichen Schlüssels (173) des Handapparats; Übertragen der Schlüsselübergabenachricht an den mobilen Handapparat (120), so dass der mobile Handapparat (120) den privaten Schlüssel (172) des Handapparats, der dem öffentlichen Schlüssel (173) des Handapparats entspricht, zum Entschlüsseln der Schlüsselübergabenachricht und zum Erhalten des symmetrischen Schlüssels (192) verwenden kann;
Entschlüsseln weiterer von dem mobilen Handapparat (120) empfangener Daten, asymmetrisch unter Verwendung eines privaten Schlüssels (182) des Servers, der dem fernzugänglichen Server (110) zugeordnet ist, und symmetrisch unter Verwendung des symmetrischen Schlüssels (192);
Verschlüsseln weiterer dem mobilen Handapparat (120) übermittelter Daten, symmetrisch unter Verwendung des symmetrischen Schlüssels (192) und asymmetrisch unter Verwendung des öffentlichen Schlüssels (173) des Handapparats; Bestimmen, dass der zuvor verwendete symmetrische Schlüssel oder ein symmetrischer Schlüssel, der verwendet oder erzeugt wurde, bevor der zuvor verwendete symmetrische Schlüssel verwendet wurde, zum Verschlüsseln von von dem mobilen Handapparat empfangenen Daten verwendet wurde, anstatt den symmetrischen Schlüssel zu verwenden, der unter Verwendung des aktualisierten Zählerwerts erzeugt wurde; und Assoziieren des mobilen Handapparats mit einer potentiellen Sicherheitsbedrohung.

13. System nach Anspruch 12, wobei der fernzugängliche Server (110) ferner eine Auslösekomponente (113B) zum Auslösen von deterministischem Aktualisieren eines verwendeten Zählerwerts, wobei deterministisches Aktualisieren eines verwendeten Zählerwerts von einem Initiierungsereignis des mobilen Handapparats und/oder einem Server-Initiierungsereignis ausgelöst wird.

14. System nach Anspruch 13, wobei die Handapparat-Softwareanwendung (140) ferner eine Servervalidierungskomponente (146) zum Validieren eines von dem fernzugänglichen Server (110) an den mobilen Handapparat (120) übertragenen digitalen Serverzertifikats (180), wobei die Validierung des digitalen Serverzertifikats (180) unter Nutzung von Funktionalität durchgeführt wird, die von einem von einer Zertifikatautorität bereitgestellten Verschlüsselungsmodul bereitgestellt wird, wobei das digitale Serverzertifikat (180) von der Zertifikatautorität auf den fernzugänglichen Server (110) ausgestellt wurde und den öffentlichen Schlüssel (183) des Servers, der dem privaten Schlüssel (182) des Servers entspricht, beinhaltet.

15. Computerprogrammprodukt zum Einrichten eines sicheren Kommunikationskanals (190) zwischen einem mobilen Handapparat (120) und einem fernzugänglichen Server (110), wobei das Computerprogrammprodukt ein computerlesbares Medium mit gespeichertem computerlesbarem Programmcode aufweist, der einen das Programm ausführenden Computer zum Durchführen der folgenden Schritte veranlasst:
deterministisches Aktualisieren eines verwendeten Zählerwertes, um einen aktualisierten Zählerwert (204) zu ergeben, wobei der verwendete Zählerwert zum Erzeugen eines zuvor verwendeten symmetrischen Schlüssels zur Verschlüsselung von Kommunikation zwischen dem fernzugänglichen Server und dem mobilen Handapparat verwendet wurde;
Speichern des aktualisierten Zählerwerts (206);
Verwenden des aktualisierten Zählerwerts zum Erzeugen eines symmetrischen Schlüssels (208);
Erzeugen einer Schlüsselübergabenachricht, die den unter Verwendung des aktualisierten Zählerwerts (210) erzeugten symmetrischen Schlüssel beinhaltet;
asymmetrisches Verschlüsseln der Schlüsselübergabenachricht unter Verwendung eines dem mobilen Handapparat (212) zugeordneten öffentlichen Schlüssels des Handapparats;
Übertragen der Schlüsselübergabenachricht an den mobilen Handapparat, so dass der mobile Handapparat einen privaten Schlüssel des Handapparats, der dem öffentlichen Schlüssel des Handapparats entspricht, zum Entschlüsseln der Schlüsselübergabenachricht und zum Erhalten des symmetrischen Schlüssels (214) verwenden kann,
**dadurch gekennzeichnet, dass** der Programmcode einen das Programm ausführenden Computer veranlasst, ferner die folgenden Schritte durchzuführen:
Entschlüsseln weiterer von dem mobilen Handapparat empfangener Daten, asymmetrisch unter Verwendung eines privaten Schlüssels des Servers, der dem fernzugänglichen Server zugeordnet ist, und symmetrisch unter Verwendung des symmetrischen Schlüssels (216);
Verschlüsseln weiterer dem mobilen Handapparat übermittelter Daten, symmetrisch unter Verwendung des symmetrischen Schlüssels und asymmetrisch unter Verwendung des öffentlichen Schlüssels des Handapparats, wobei das computerlesbare Medium ein nichtflüchtiges computerlesbares Medium ist, wobei der computerlesbare Programmcode von einer Verarbeitungsschaltung (218) ausführbar ist;
Bestimmen, dass der zuvor verwendete symmetrische Schlüssel oder ein symmetrischer Schlüssel, der verwendet oder erzeugt wurde, bevor der zuvor verwendete symmetrische Schlüssel verwendet wurde, zum Verschlüsseln von von dem mobilen Handapparat empfangenen Daten verwendet wurde, anstatt den symmetrischen Schlüssel zu verwenden, der unter Verwendung des aktualisierten Zählerwerts erzeugt wurde; und
Assoziieren des mobilen Handapparats mit einer potentiellen Sicherheitsbedrohung.

## Revendications

1. Procédé (200) permettant d'établir une voie de communication sécurisée entre un combiné téléphonique mobile et un serveur accessible à distance, le procédé se déroulant au niveau du serveur accessible à distance et comportant les étapes qui consistent à:
mettre à jour de manière déterministe une ancienne valeur du compteur afin de produire une valeur du compteur mise à jour (204), l'ancienne valeur du compteur ayant servi à produire une clé symétrique précédemment utilisée pour crypter les communications entre le serveur accessible à distance et le combiné téléphonique mobile;
ranger en mémoire la valeur du compteur mise à jour (206);
utiliser la valeur du compteur mise à jour pour produire une clé symétrique (208);
générer un message de transfert de la clé qui comprend la clé symétrique produite au moyen de la valeur du compteur mise à jour (210);
crypter de manière asymétrique le message de transfert de la clé en se servant d'une clé publique de combiné téléphonique associée au combiné téléphonique mobile (212);
transmettre le message de transfert de la clé au combiné téléphonique mobile de manière à ce que le combiné téléphonique mobile soit capable de se servir d'une clé privée du combiné téléphonique correspondant à la clé publique du combiné téléphonique pour décrypter le message de transfert de la clé et obtenir la clé symétrique (214).
**caractérisé en ce que** le procédé comporte par ailleurs les étapes qui consistent à:
décrypter d'autres données reçues du combiné téléphonique mobile en se servant de manière asymétrique d'une clé privée du serveur associée au serveur accessible à distance et en se servant de manière symétrique de la clé symétrique (216);
crypter d'autres données communiquées au combiné téléphonique mobile en se servant de manière symétrique de la clé symétrique et en se servant de manière asymétrique de la clé publique du combiné téléphonique;
déterminer que la clé symétrique précédemment utilisée ou bien qu'une clé symétrique utilisée ou
produite avant l'utilisation de la clé symétrique précédemment utilisée, a servi à crypter les données reçues du combiné téléphonique mobile plutôt que se servir de la clé symétrique produite au moyen de la valeur du compteur mise à jour; et
associer le combiné téléphonique mobile à une menace potentielle pour la sécurité.

2. Procédé selon la revendication 1, **caractérisé en ce que** l'étape qui consiste à mettre à jour de manière déterministe l'ancienne valeur du compteur est déclenchée par la mise en oeuvre soit d'un combiné téléphonique mobile soit d'un serveur, soit de ces deux unités.

3. Procédé selon la revendication 2, **caractérisé en ce que** la mise en oeuvre du combiné téléphonique mobile ou la mise en oeuvre du serveur consiste entre autres à procéder à une opération cryptographique asymétrique sur les données communiquées entre le serveur accessible à distance et le combiné téléphonique mobile.

4. Procédé selon la revendication 2, **caractérisé en ce que** la mise en oeuvre d'un combiné téléphonique mobile comprend une ou plusieurs des étapes suivantes: une communication quelconque transmise par le combiné téléphonique mobile en direction du serveur accessible à distance; la réception d'une communication quelconque transmise par le serveur accessible à distance en direction du combiné téléphonique mobile; la réception d'une communication provenant du combiné téléphonique mobile qui est cryptée de manière asymétrique au moyen de la clé publique du serveur; la réception d'une communication provenant du combiné téléphonique mobile qui est signée numériquement au moyen de la clé privée du combiné téléphonique; et la réception d'une communication provenant du combiné téléphonique mobile qui est cryptée de manière symétrique au moyen de la clé symétrique précédemment employée.

5. Procédé selon la revendication 2, **caractérisé en ce que** la mise en oeuvre du serveur comprend une ou plusieurs des opérations suivantes: une ou plusieurs étapes d'établissement de liaison entre le serveur accessible à distance et le combiné téléphonique mobile, la transmission, en direction du combiné téléphonique mobile, d'une communication qui est cryptée de manière asymétrique au moyen de la clé publique du combiné téléphonique, et la transmission, en direction du combiné téléphonique mobile, d'une communication qui est cryptée de manière symétrique au moyen de la clé symétrique précédemment employée.

6. Procédé selon l'une quelconque des revendications précédentes, **caractérisé en ce que** la mise à jour de manière déterministe de l'ancienne valeur du compteur est déclenchée lorsque débute une nouvelle session de communication entre le serveur accessible à distance et le combiné téléphonique mobile.

7. Procédé selon l'une quelconque des revendications précédentes, **caractérisé en ce que** l'ancienne valeur du compteur a servi, avec une valeur d'amorçage statique, pour générer la clé symétrique précédemment employée, et **caractérisé en ce que** l'étape qui consiste à se servir de la valeur du compteur mise à jour pour générer une clé symétrique comprend l'utilisation de la valeur du compteur mise à jour et aussi de la valeur d'amorçage statique.

8. Procédé selon la revendication 7, **caractérisé en ce que** la valeur du compteur et la valeur d'amorçage statique ne sont pas connues par le combiné téléphonique mobile.

9. Procédé selon la revendication 7 ou la revendication 8, **caractérisé en ce que** la clé symétrique est générée au moyen d'un algorithme de mot de passe unique, et **caractérisé en ce que** la valeur du compteur et la valeur d'amorçage statique sont utilisées comme compteur et comme clé dans l'algorithme.

10. Procédé selon l'une quelconque des revendications précédentes, comportant par ailleurs au moins une étape d'établissement de liaison entre le serveur accessible à distance et le combiné téléphonique mobile, cette étape d'établissement de liaison comprenant l'une ou l'autre des deux opérations suivantes ou bien les deux opérations qui consistent: transmettre
à recevoir un certificat d'utilisateur numérique provenant du combiné téléphonique mobile au moyen d'une application logicielle serveur installée sur le serveur accessible à distance et à valider le certificat d'utilisateur numérique au moyen de la fonctionnalité prévue par un module de cryptage distribué par une autorité de certification, le certificat d'utilisateur numérique ayant été délivré pour le combiné téléphonique mobile par l'autorité de certification et couvrant la clé publique du combiné téléphonique et par un identificateur associé de manière unique au combiné téléphonique mobile; et
à transmettre un certificat d'utilisateur numérique au combiné téléphonique mobile en vue de valider le serveur accessible à distance, en vue de valider également le certificat du serveur numérique au moyen d'une application logicielle combiné téléphonique installée sur le combiné téléphonique mobile en utilisant la fonctionnalité prévue par un module de cryptage distribué par l'autorité de certification, le certificat d'utilisateur numérique ayant été délivré pour le serveur accessible à distance par l'autorité de certification et couvrant la clé publique du serveur qui correspond à la clé privée du serveur.

11. Procédé selon l'une quelconque des revendications précédentes, comportant par ailleurs l'étape suivante: si le décryptage symétrique des autres données au moyen de la clé symétrique n'est pas mené à bien, chercher à décrypter les autres données en utilisant la clé symétrique précédemment employée qui est générée au moyen de l'ancienne valeur du compteur plutôt qu'utiliser la clé symétrique produite au moyen de la valeur du compteur mise à jour.

12. Système (100) permettant d'établir une voie de communication sécurisée (190) entre un combiné téléphonique mobile (120) et un serveur accessible à distance (110), le système comportant:
une application logicielle combiné téléphonique (140) configurée de manière à être installée sur le combiné téléphonique mobile (120) en vue de recevoir un message de transfert de la clé et de décrypter de manière asymétrique le message de transfert de la clé afin d'en obtenir une clé symétrique (192), le combiné téléphonique mobile (120) étant associé à une clé publique (173) de combiné téléphonique et une clé privée correspondante (172) de combiné téléphonique; et
un serveur accessible à distance (110) qui comprend:
un élément cryptographique asymétrique (111) servant à procéder au cryptage et au décryptage asymétrique;
un élément cryptographique symétrique (112) servant à procéder au cryptage et au décryptage symétrique;
un élément de mise à jour du compteur (113A) servant à mettre à jour de manière déterministe une ancienne valeur du compteur afin de produire une valeur du compteur mise à jour, l'ancienne valeur du compteur ayant servi à produire une clé symétrique précédemment utilisée pour crypter les communications entre le serveur accessible à distance (110) et le combiné téléphonique mobile (120);
un élément de rangement (114) servant à ranger en mémoire la valeur du compteur mise à jour;
un élément de production d'une clé (115) servant à utiliser la valeur du compteur mise à jour pour produire une clé symétrique (192);
un élément de production d'un message (116) servant à générer un message de transfert de la clé qui comprend la clé symétrique (192) produite au moyen de la valeur du compteur mise à jour;
un élément de transmission de données (117) servant à transmettre les données en direction du combiné téléphonique mobile (120); et
un élément de réception de données (118) servant à recevoir les données qui proviennent du combiné téléphonique mobile (120), **caractérisé en ce que** le serveur accessible à distance (110) est configuré de façon à: crypter de manière asymétrique le message de transfert de la clé en se servant de la clé publique (173) du combiné téléphonique; transmettre le message de transfert de la clé au combiné téléphonique mobile (120) de manière à ce que le combiné téléphonique mobile (120) soit capable de se servir de la clé privée (172) du combiné téléphonique correspondant à la clé publique (173) du combiné téléphonique pour décrypter le message de transfert de la clé et obtenir la clé symétrique (192); décrypter les autres données reçues du combiné téléphonique mobile (120) en se servant de manière asymétrique d'une clé privée (182) du serveur associée au serveur accessible à distance (110) et en se servant de manière symétrique de la clé symétrique (192); crypter les autres données communiquées au combiné téléphonique mobile (120) en se servant de manière symétrique de la clé symétrique (192) et en se servant de manière asymétrique de la clé publique (173) du combiné téléphonique; déterminer que la clé symétrique précédemment utilisée ou bien qu'une clé symétrique utilisée ou produite avant l'utilisation de la clé symétrique précédemment utilisée, a servi à crypter les données reçues du combiné téléphonique mobile plutôt que se servir de la clé symétrique produite au moyen de la valeur du compteur mise à jour; et associer le combiné téléphonique mobile à une menace potentielle pour la sécurité.

13. Système selon la revendication 12, **caractérisé en ce que** le serveur accessible à distance (110) comprend par ailleurs un élément de déclenchement (113B) qui lance de manière déterministe la mise à jour d'une ancienne valeur du compteur, cette mise à jour déterministe de l'ancienne valeur du compteur étant déclenchée par la mise en oeuvre d'un combiné téléphonique mobile et/ou d'un serveur.

14. Système selon la revendication 13, **caractérisé en ce que** l'application logicielle (140) combiné téléphonique comporte par ailleurs un élément de validation du serveur (146) en vue de valider un certificat du serveur numérique (180) transmis à partir du serveur accessible à distance (110) en direction du combiné téléphonique mobile (120), la validation du certificat du serveur numérique (180) s'effectuant en utilisant la fonctionnalité prévue par un module de cryptage distribué par une autorité de certification, le certificat du serveur numérique (180) ayant été délivré pour le serveur accessible à distance (110) par l'autorité de certification et couvrant la clé publique (183) du serveur qui correspond à la clé privée (182) du serveur.

15. Produit programme informatique permettant d'établir une voie de communication sécurisée (190) entre un combiné téléphonique mobile (120) et un serveur accessible à distance (110), le produit programme informatique comprenant un support exploitable sur ordinateur qui comporte un code programme rangé en mémoire grâce auquel l'ordinateur exécute les étapes qui consistent à
mettre à jour de manière déterministe une ancienne valeur du compteur afin de produire une valeur du compteur mise à jour (204), l'ancienne valeur du compteur ayant servi à produire une clé symétrique précédemment utilisée pour crypter les communications entre le serveur accessible à distance et le combiné téléphonique mobile;
ranger en mémoire la valeur du compteur mise à jour (206);
utiliser la valeur du compteur mise à jour pour produire une clé symétrique (208);
générer un message de transfert de la clé qui comprend la clé symétrique produite au moyen de la valeur du compteur mise à jour (210);
crypter de manière asymétrique le message de transfert de la clé en se servant d'une clé publique de combiné téléphonique associée au combiné téléphonique mobile (212);
transmettre le message de transfert de la clé au combiné téléphonique mobile de manière à ce que le combiné téléphonique mobile soit capable de se servir d'une clé privée du combiné téléphonique correspondant à la clé publique du combiné téléphonique pour décrypter le message de transfert de la clé et obtenir la clé symétrique (214).
**caractérisé en ce que** le code programme fait exécuter par l'ordinateur par ailleurs les étapes qui consistent à:
décrypter les autres données reçues du combiné téléphonique mobile en se servant de manière asymétrique d'une clé privée du serveur associée au serveur accessible à distance et en se servant de manière symétrique de la clé symétrique (216);
crypter les autres données communiquées au combiné téléphonique mobile en se servant de manière symétrique de la clé symétrique et en se servant de manière asymétrique de la clé publique du combiné téléphonique, **caractérisé en ce que** le support exploitable sur ordinateur est un support exploitable sur ordinateur non transitoire, le code programme exploitable sur ordinateur étant exécuté par un circuit de traitement (218);
déterminer que la clé symétrique précédemment utilisée ou bien qu'une clé symétrique utilisée ou produite avant l'utilisation de la clé symétrique précédemment utilisée, a servi à crypter les données reçues du combiné téléphonique mobile plutôt que se servir de la clé symétrique produite au moyen de la valeur du compteur mise à jour; et associer le combiné téléphonique mobile à une menace potentielle pour la sécurité.
